# EUROPEAN PATENT SPECIFICATION

(11) **EP 0 585 015 B1**
(45) Date of publication and mention of the grant of the patent: **02.01.1997**
(21) Application number: 93306409.9
(22) Date of filing: 13.08.1993
(51) Int. Cl.: A47J 27/21, H05B 3/26

(54) **Apparatus for heating liquid**
Heizgerät für Flüssigkeiten
Dispositif à chauffer des liquides

(30) Priority: 13.08.1992 GB 9217145
(43) Date of publication of application: 02.03.1994
(73) Proprietor: PIFCO LIMITED, Manchester M35 OHS (GB)
(72) Inventor: Little, Peter James, Malmesbury, Wiltshire SN16 9JE (GB)
(74) Representative: Bray, Lilian Janet

(56) References cited:
- EP-A- 0 201 967
- EP-A- 0 286 217
- EP-A- 0 485 211
- DE-A- 3 545 445
- DE-U- 8 902 013
- GB-A- 1 548 406
- GB-A- 2 153 190

## Description

This invention relates to apparatus for heating liquid comprising a vessel and a heater element and in particular but not exclusively to a vessel in the form of a kettle for heating water.

It is known to provide heater elements comprising a resistive track applied using thick film techniques to an electrically insulated surface of substrate. It is proposed in EP-0485211-A that such a heater element should be incorporated into a vessel in order to heat liquid contained within the vessel and that the substrate should define a liquid heating portion of an internal surface of the vessel. It is important to ensure that the heater element does not overheat in use since such overheating can destroy the operability of the element for example by evaporating the resistive track.

It has also been proposed in GB-2153190-A to provide a kettle with a thick film circuit heater element suspended within the vessel and provided with a temperature sensor screen printed on the substrate adjacent to the heater track or a looped track of which a part constitutes a temperature sensor track. A disadvantage of such sensors in that they provide temperature sensing in a localised manner whereas the heater track is distributed over a relatively large surface of the substrate.

In GB-1548406-A is disclosed an electrically heated cooking pan which is provided with temperature control. The heater element comprises a slotted metal foil which is pressed or etched in a complex pattern of zigzag conductor loops and applied to the outside of the bottom of the pan. The temperature control is achieved by a temperature sensing element defined by one or more loops placed around the periphery or in transverse slots of the heating element. Such a temperature sensing element enables an optimum sensing of the bottom temperature to be obtained. However, such an arrangement does not take into account the possibility of the pan being tilted or tipped during use and the effect on the heating element.

A heater element incorporated into a vessel such as a kettle is susceptible to any tilting of the vessel which would expose part of the liquid heating portion above the level of liquid in the vessel since this will rapidly result in overheating due to the relatively poor conductivity of air. The tendency for the exposed portion to overheat is also exacerbated by the heater element typically having a positive temperature coefficient of resistance which results in increased heat generation with increased temperature.

According to the present invention there is disclosed apparatus for heating liquid comprising a vessel defining a chamber for receiving liquid in use and a pouring spout located in a front wall of the vessel, a substrate defining a liquid heating portion of an internal surface of the vessel, the liquid heating portion being located so as to be normally covered by liquid in use and comprising a front portion proximal to the front wall and a rear portion distal to the front wall, a heater element comprising a resistive track applied to an electrically insulated surface of the substrate, a power control circuit operable to supply power to the heater element, first and second temperature sensors formed as electrically resistive tracks on the insulated surface of the substrate, the circuit being operable to turn off the power in response to an excess temperature being sensed by means of the sensors, and characterised by the first and second temperature sensors being in proximity with the heater element and extending peripherally of the front and rear portions of the liquid heating portion respectively, and the power control circuit being operable to turn off power to the heater element in response to a difference in temperature between the first and second sensors being sensed.

Such an arrangement ensures that any tendency towards overheating of part of the liquid heating portion due to tilting of the apparatus is rapidly detected since it is the periphery and typically the rear portion of the liquid heating portion which will be first exposed during such tilting action.

Advantageously, the liquid heating portion comprises left and right hand portions respectively to the left and right hand of the pouring spout and each one of the first and second sensors is associated with a respective different one of the left and right hand portions so as to extend peripherally of that portion.

Conveniently, the heater element extends in serpentine manner across the substrate such that the heating element is folded to define linear portions of resistive track which extend parallel to one another, and the first and second sensors are interdigitated with the linear portions.

An advantage of such an arrangement is that the heat generated from the heater element is distributed across the liquid heating portion thereby to avoid nucleate boiling of the liquid.

By interdigitating the sensors with the heating element, any localised overheating of the element can be rapidly detected.

Conveniently, the power control circuit is constituted by a thick film printed circuit formed on the substrate integrally with the heater element and the temperature sensors.

In a preferred embodiment the vessel is a kettle for heating water, and the internal surface of the kettle has a bottom surface portion constituted by an exposed surface of the substrate, the insulated surface of the substrate being external to the chamber.

Conveniently, the temperature sensors are formed by a resistive track comprising a nickel based thick film ink.

Advantageously the heater element comprises a resistive track formed by two or more track elements following a common serpentine path in parallel spaced proximity to one another.

This assists in the even distribution of heat on the substrate and reduces the effects if current hogging causing overheating at the inner edges of curves in the heat element resistive tracks by dividing the current into two or more track elements.

A preferred embodiment of the present invention will now be described by way of example only and with reference to the accompanying drawings of which:-
Figure 1 is a schematic view of the underside of a substrate having a heater element,
Figure 2 is a perspective view of a kettle incorporating the substrate and heater element of Figure 1,
Figure 3 shows an electrical circuit for controlling the power supply of the kettle of Figure 2, and
Figure 4 shows the underside of an alternative substrate having a heater element for use in a modified kettle of the type shown in Figure 2.

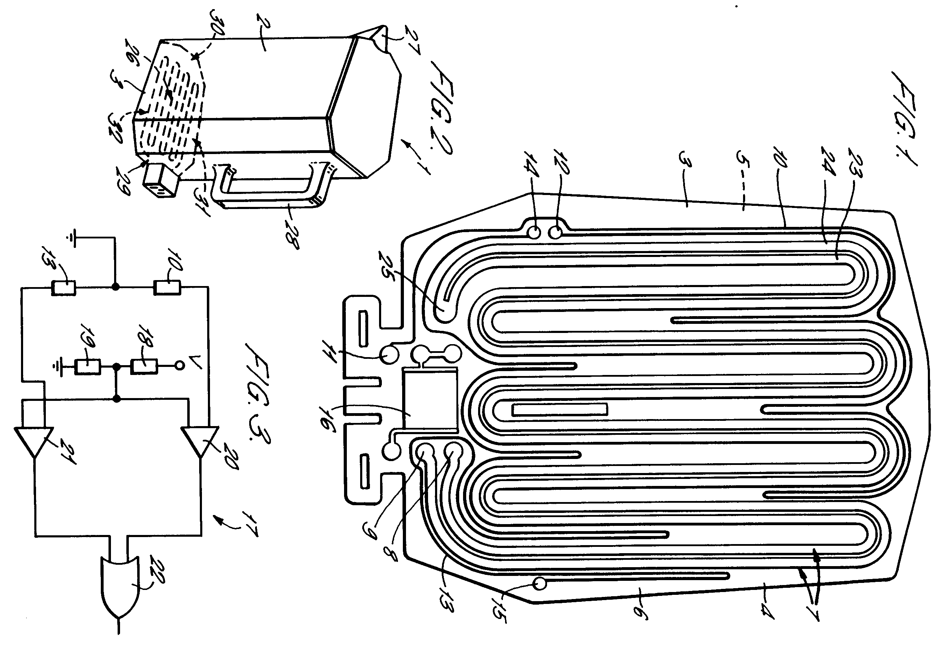

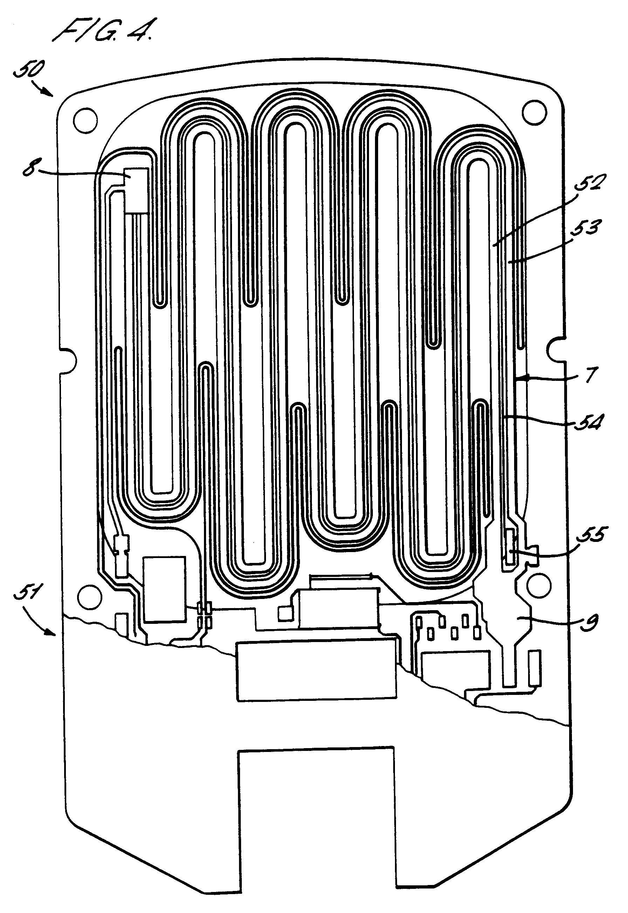

Apparatus in accordance with the present invention is shown in Figure 2 to comprise a vessel in the form of a kettle 1 having a body 2 formed of a plastics material. The kettle 1 has a base 3 comprising a steel plate substrate 4 which is peripherally bonded to the body 2. The kettle is provided with a thermally and electrically insulating layer (not shown) covering the base so as to insulate the base from any work surface onto which the kettle is placed in use. The base 3 has an underside 5 illustrated in Figure 1 which is coated with an insulating layer 6 on which is printed a heater element 7 in the form of a serpentine track of resistive material. The base 3 has an upper side 26 which constitutes a liquid heating portion of the internal surface of the kettle 1. Since the base 3 is located at the bottom of the kettle 1 it is normally covered by water when in use provided that the kettle is in its normal upright position.

The heater element 7 terminates in terminal pads 8 and 9 which are connected to a power supply circuit (not shown).

A first temperature sensor 10 in the form of a resistive track is also printed on the insulated layer 6 and extends in close proximity with the heater element 7 along two sides of the periphery of the heater element. The first temperature sensor 10 extends in serpentine manner so as to interdigitate with the folds formed in the heater element 7 and extends between first and second sensor terminal pads 11 and 12 respectively. A second temperature sensor 13 extends in like manner in close proximity with the remaining two peripheral sides of the heater element 7 and extends between third and fourth sensor terminal pads 14 and 15 respectively. The first and second temperature sensors thereby extend peripherally of the heater element in the plane of the insulated layer 6.

A resistor 16 forming part of a supply circuit is also printed on the insulating layer 6.

The first and second temperature sensors 10 and 13 are connected so as to form part of a sensor circuit 17 as shown in Figure 3. Resistors 18 and 19 act as potential dividers to generate a threshold voltage which is input to comparators 20 and 21. The outputs of comparators 20 and 21 drive an output device 22 which is connected to the power supply circuit such that an output signal is generated in response to there being a difference in resistance between sensors 10 and 13, the output signal being arranged to cut off power to the heater element 7.

In the above example the heater element 7 consists of two parallel lengths of track 23 and 24 which extend from terminal pads 8 and 9 respectively and are joined together at end terminals 25. Each length 23 and 24 provides 1200 watts of heating and is printed in Pd/Ag resistive material having a resistance of 140m ohm per square centimetre. The heating element 7 provides a power density of 0.75 watts per square millimetre.

The first and second temperature sensors 10 and 13 are printed from nickel based thick film ink with a temperature coefficient of resistance of approximately 8000 ppm and have a total resistance of 630 ohms at 20°C.

The kettle 1 is provided with a steam actuated thermal cut-out (not shown) which will turn off the power when the water within the kettle has boiled.

In use the kettle is filled or partially filled with water and power is supplied to the heater element 7. Heat generated by the heater element 7 is conducted through the steel substrate 4 and into the water which contacts the upper side of the base 3. This thermal transfer proceeds at a rate which ensures that the heater element 7 does not overheat and results in the temperature of the water being raised progressively to boiling point. The temperature of the water will eventually reach boiling point at which time the heat transfer results in the formation of steam which then activates the steam sensor and cuts off power to the heater element 7.

If during the heating process the kettle is tilted to an extent that part of the upper side of the base 3 is no longer covered by water, then the exposed part of the upper side 26 of the base 3 will rapidly become hotter than the remainder of the upper side. Typically tilting movement is likely to arise in use by a user pouring water from a spout 27 of the kettle in a tilting movement in which the kettle is supported by handle 28. Tilting in this direction will expose a part 29 of the upper sides 26 of the base 3 which is adjacent to the handle 28. At this part 29 will therefore rapidly tend to overheat thereby causing localised overheating of the substrate 4, the heater element 7 and the temperature sensors 10 and 13. As can be seen in Figure 1 the second temperature sensor 13 extends to a greater extent than the first temperature sensor 10 along this part of the periphery of the heater element 7 so that consequently the increase in resistance of the second temperature sensor will be greater than that of the first temperature sensor. A difference in resistance between the first and second temperature sensors 10 and 13 is then detected by the sensor circuit 17 resulting in the power to the heater element 7 being rapidly shut off thereby avoiding the destructive effects of overheating.

Tilting in the reverse direction will expose a different part 30 of the upper side 26 of the base 3 adjacent to the spout 27. In this instance it can be seen from Figure 1 that the first temperature sensor 10 will respond with an increased resistance which can then be sensed by the circuit 17.

Lateral tilting of the kettle 1 to the right or left will similarly result in overtemperature being sensed by the first or second temperature sensor respectively if corresponding right and left hand parts 31 and 32 respectively of the upper sides 26 are exposed.

The kettle 1 may alternatively include a modified substrate 50 as illustrated in Figure 4 which will be described using corresponding reference numerals to those of preceding Figures where appropriate for corresponding elements.

The substrate 50 is viewed from underneath in Figure 4 with respect to the normal orientation of kettle 1 so that the heater element 7 is formed on an outer surface of the substrate which is external to the chamber within which water is received for heating. A power control circuit 51 which incorporates the sensor circuit 17 shown in Figure 3 is also formed on the substrate 50 and includes discrete components which are surface mounted such that the substrate, the power control circuit, the heater element 7 and temperature sensors 10 and 13 together constitute a hybrid thick film circuit of integral construction.

In Figure 4 the heater element 7 extends between first and second terminal pads 8 and 9, pad 8 receiving a spade connector (not shown) for connection to a thermal fuse in line with the circuit.

The heater element 7 is formed as a resistive track having two main track elements 52 and 53 following a common serpentine path in parallel proximity. This arrangement has the advantage of reducing the effect of localised heating along the inside edges of bends formed in the tracks, a phenomenon often referred to as "current hogging". Between the parallel tracks 52 and 53, a relatively narrow resistance trimming track 54 is provided and terminates in a pad 55 which optionally can be linked to the pad 9 during assembly if it is required to reduce the total resistance of the heater element 7 to meet manufacturing tolerance.

The use of such a resistance trimming track 54 eases the required printing tolerance on the track elements 52 and 53.

The kettle may alternatively have a body formed of metal which may be bright finished steel or vitreous enamel for example.

## Claims

1. Apparatus for heating liquid comprising a vessel (1) defining a chamber for receiving liquid in use and a pouring spout (27) located in a front wall of the vessel (1), a substrate (4) defining a liquid heating portion (26) of an internal surface of the vessel, the liquid heating portion being located so as to be normally covered by liquid in use and comprising a front portion (30) proximal to the front wall and a rear portion (29) distal to the front wall, a heater element (7) comprising a resistive track applied to an electrically insulated surface (6) of the substrate, a power control circuit (17,51) operable to supply power to the heater element, first and second temperature sensors (10,13) formed as electrically resistive tracks on the insulated surface of the substrate, the circuit (17,51) being operable to turn off the power in response to an excess temperature being sensed by means of the sensors (10,13), and characterised by the first and second temperature sensors (10,13) being in proximity with the heater element (7) and extending peripherally of the front and rear portions of the liquid heating portion respectively, and the power control circuit being operable to turn off power to the heater element (7) in response to a difference in temperature between the first and second sensors being sensed.

2. Apparatus as claimed in Claim 1, characterised by the liquid heating portion comprising left and right hand portions (32,31) respectively to the left and right hand of the pouring spout (27) and by each one of the first and second sensors (10,13) being associated with a respective different one of the left and right hand portions (32,31) so as to extend peripherally of that portion.

3. Apparatus as claimed in Claim 1 or Claim 2, characterised by the heater element (7) extending in serpentine manner across the substrate (4) such that the heating element (7) is folded to define linear portions (23,24) of resistive track which extend parallel to one another, and by the first and second sensors (10,13) being interdigitated with the linear portions.

4. Apparatus as claimed in any one of Claims 1 to 3, characterised by the power control circuit (17,51) being constituted by a thick film printed circuit formed on the substrate integrally with the heater element (7) and the temperature sensors(10,13).

5. Apparatus as claimed in any one of Claims 1 to 4, wherein the vessel (1) is a kettle for heating water, and characterised by the internal surface of the kettle having a bottom surface portion constituted by an exposed surface of the substrate and the insulated surface of the substrate being external to the chamber.

6. Apparatus as claimed in any one of Claims 1 to 5, characterised by the temperature sensors being formed by a resistive track comprising a nickel based thick film ink.

7. Apparatus as claimed in any one of Claims 1 to 6, characterised by the heater element comprising a resistive track formed by two or more track elements (52,53) following a common serpentine path in parallel spaced proximity to one another.

## Patentansprüche

1. Vorrichtung zum Aufheizen von Flüssigkeit, die folgendes aufweist:
einen Behälter (1), der eine Kammer bildet, um im Betrieb Flüssigkeit aufzunehmen, und der eine Gießschnauze (27) besitzt, die in einer vorderen Wand des Behälters (1) angeordnet ist,
ein Substrat (4), das einen Flüssigkeits-Heizbereich (26) einer Innenoberfläche des Behälters bildet, wobei der Flüssigkeits-Heizbereich so angeordnet ist, daß er normalerweise im Betrieb von Flüssigkeit bedeckt ist, und einen vorderen Bereich (30) proximal zur vorderen Wand und einen hinteren Bereich (29) distal zur vorderen Wand aufweist, ein Heizelement (7), das eine Widerstandsbahn aufweist, die an einer elektrisch isolierten Oberfläche (6) des Substrats angebracht ist,
eine Stromsteuerschaltung (17, 51), die betreibbar ist, um dem Heizelement Strom zuzuführen, und
erste und zweite Temperaturfühler (10, 13), die als elektrische Widerstandsbahnen auf der isolierten Oberfläche des Substrats ausgebildet sind, wobei die Schaltung (17, 51) derart betätigbar ist, daß sie den Strom abschaltet, und zwar in Abhängigkeit von einer übermäßigen Temperatur, die mit Hilfe der Fühler (10, 13) gemessen wird,
dadurch gekennzeichnet,
daß die ersten und zweiten Temperaturfühler (10, 13) sich in der Nähe des Heizelementes (7) befinden und längs der Peripherie der vorderen bzw. hinteren Bereiche des Flüssigkeits-Heizbereiches verlaufen, wobei die Stromsteuerschaltung derart betreibbar ist, daß sie den Strom zu dem Heizelement in Abhängigkeit von einer gemessenen Temperaturdifferenz zwischen den ersten und zweiten Fühlern abschaltet.

2. Vorrichtung nach Anspruch 1,
dadurch gekennzeichnet,
daß der Flüssigkeits-Heizbereich linke bzw. rechte Bereiche (32, 31) bezogen auf die linke und die rechte Seite von der Gießschnauze (27) aufweist und daß jeder von den ersten und zweiten Fühlern (10, 13) einem jeweils anderen von den linken und rechten Bereichen (32, 31) zugeordnet ist, derart, daß er sich längs der Peripherie des jeweiligen Bereiches erstreckt.

3. Vorrichtung nach Anspruch 1 oder 2,
dadurch gekennzeichnet,
daß das Heizelement (7) sich schlangenlinienförmig über das Substrat (4) erstreckt, so daß das Heizelement (7) gefaltet ist und lineare Bereiche (23, 24) aus Widerstandsbahnen bildet, die parallel zueinander verlaufen, und daß die ersten und zweiten Fühler (10, 13) mit den linearen Bereichen fingerförmig ineinandergreifen.

4. Vorrichtung nach einem der Ansprüche 1 bis 3,
dadurch gekennzeichnet,
daS die Stromsteuerschaltung (17, 51) aus einer gedruckten Dickschichtschaltung besteht, die integral mit dem Heizelement (7) und den Temperaturfühlern (10, 13) auf dem Substrat ausgebildet ist.

5. Vorrichtung nach einem der Ansprüche 1 bis 4,
wobei der Behälter (1) ein Kessel zum Aufheizen von Wasser ist,
dadurch gekennzeichnet,
daß die Innenoberfläche des Kessels einen Bodenoberflächenbereich besitzt, der von einer freiliegenden Oberfläche des Substrats gebildet wird,
und daß die isolierte Oberfläche des Substrats sich außerhalb der Kammer befindet.

6. Vorrichtung nach einem der Ansprüche 1 bis 5,
dadurch gekennzeichnet,
daß die Temperaturfühler aus einer Widerstandsbahn gebildet sind, die eine Dickschichttinte auf Nickelbasis aufweist.

7. Vorrichtung nach einem der Ansprüche 1 bis 6,
dadurch gekennzeichnet,
daß das Heizelement eine Widerstandsbahn aufweist, die von zwei oder mehr Bahnelementen (52, 53) gebildet ist, die einem gemeinsamen schlangenlinienförmigen Pfad in paralleler, beabstandeter Nähe zueinander folgen.

## Revendications

1. Appareil de chauffage d'un liquide, comprenant un récipient (1) délimitant une chambre de logement d'un liquide pendant l'utilisation et un bec (27) de coulée placé dans une paroi avant du récipient (1), un substrat (4) délimitant une partie (26) de chauffage de liquide d'une surface interne du récipient, la partie de chauffage de liquide étant disposée afin qu'elle soit normalement couverte du liquide pendant l'utilisation et comprenant une partie avant (30) proche de la paroi avant et une partie arrière (29) distante de la paroi avant, un élément chauffant (7) comprenant une piste résistive appliquée à une surface (6) du substrat qui est isolée électriquement, un circuit (17, 51) de réglage d'alimentation commandé afin qu'il transmette de l'énergie à l'élément chauffant, un premier et un second capteur (10, 13) de température formés par des pistes électriquement résistives placées à la surface isolée du substrat, le circuit (17, 51) pouvant fonctionner afin qu'il interrompe l'alimentation lorsqu'une température excessive est détectée par les capteurs (10, 13), et caractérisé en ce que le premier et le second capteur (10, 13) de température sont à proximité de l'élément chauffant (7) et sont disposés à la périphérie des parties avant et arrière de la partie de chauffage de liquide respectivement, et le circuit de réglage de puissance est destiné à interrompre l'alimentation de l'élément chauffant (7) lors de la détection d'une différence de température entre le premier et le second capteur.

2. Appareil selon la revendication 1, caractérisé en ce que la partie de chauffage de liquide comporte des parties gauche et droite (32, 31) respectivement placées à gauche et droite du bec de coulée (27), chacun des premier et second capteurs (10, 13) étant associé à une partie respective différente parmi les parties gauche et droite (32, 31) afin qu'il soit disposé à la périphérie de cette partie.

3. Appareil selon la revendication 1 ou 2, caractérisé en ce que l'élément chauffant (7) est disposé sous forme sinueuse sur le substrat (4) afin que l'élément chauffant (7) soit replié et délimite des parties linéaires (23, 24) de pistes résistive qui sont parallèles l'une à l'autre, et le premier et le second capteur (10, 13) sont imbriqués avec les parties linéaires.

4. Appareil selon l'une quelconque des revendications 1 à 3, caractérisé en ce que le circuit (17, 51) de réglage d'alimentation est constitué par un circuit imprimé en couches épaisses formé sur le substrat sous forme solidaire de l'élément chauffant (7) et des capteurs de température (10, 13).

5. Appareil selon l'une quelconque des revendications 1 à 4, dans lequel le récipient (1) est une bouilloire de chauffage d'eau, et caractérisé en ce que la surface interne de la bouilloire a une partie de surface inférieure constituée par une surface exposée du substrat et la surface isolée du substrat étant à l'extérieur de la chambre.

6. Appareil selon l'une quelconque des revendications 1 à 5, caractérisé en ce que les capteurs de température sont formés par une piste résistive comprenant une encre en couche épaisse à base de nickel.

7. Appareil selon l'une quelconque des revendications 1 à 6, caractérisé en ce que l'élément chauffant comprend une piste résistive formée par au moins deux éléments de piste (52, 53) qui suivent un trajet sinueux commun, et sont parallèles et à proximité l'un de l'autre.
